Europäisches Patentamt

European Patent Office

Office européen des brevets

(19)

(11) Publication number: **0 372 633**

**A1**

(12) **EUROPEAN PATENT APPLICATION**

(21) Application number: **89203040.4**

(22) Date of filing: **29.11.89**

(51) Int. Cl.5: **G08B 3/10**

(30) Priority: **05.12.88 NL 8802989**

(43) Date of publication of application:
**13.06.90 Bulletin 90/24**

(84) Designated Contracting States:
**DE FR GB NL SE**

(71) Applicant: **Ericsson Paging Systems B.V.**
**Nautilusstraat 3**
**NL-7821 AG Emmen(NL)**

(72) Inventor: **Steen, Petrus Antonius Johannes**
**31, Limietweg**
**NL-7884 TA Barger Compascuum(NL)**

(74) Representative: **van der Arend, Adrianus G.A.,**
**Ir. et al**
**EXTERPATENT B.V. P.O. Box 90649**
**NL-2509 LP The Hague(NL)**

(54) **Personal paging system with call-back identification.**

㉗ A personal paging system comprising a central paging transmitter, a central receiver and at least one portable pager, the central transmitter being able to transmit a paging signal comprising a selectable identification code. A portable pager receiving said paging signal will compare the identification code received by said signal with an identification code assigned and stored in said unit. In case of equality the pager will signal the user of the pager about this. The user may transmit a report signal comprising his speech for some time and preceded by said stored identification code. The central receiver is able to receive such report signal and to separate the speech signal and the identification code therefrom. The speech part of the report signal may further be preceded by a localisation code stored in the pager upon receipt of a localisation signal comprising said localisation code from a localisation transmitter, of a number of localisation transmitters, said localisation code is assigned to.

FIG. 1.

EP 0 372 633 A1

## Personal paging system with call-back identification.

The invention relates to a personal paging system comprising a paging transmitter for transmitting a paging signal obtained by modulation of a first carrier wave with a first frequency by a selectable identification code and a number of portable paging units each with first receiving means for receiving the paging signal and for separating the transmitted identification code therefrom, comparison means for comparing the transmitted identification code with an identification code assigned to the paging unit, signalling means for giving a signal depending on the result of the comparison, transmitting means for transmitting a report signal obtained by modulation of a second carrier wave with a second frequency by a modulation signal, the modulation signal comprising a section corresponding to a speech signal, and actuating means for releasing the transmitting means, and central receiving means which are suitable for receiving the report signal and for separating the speech signal therefrom.

A personal paging system of this type is known in practice. Depending on the regulations which are laid down by the authority granting the broadcasting permit, which regulations can differ from country to country, a user of a portable paging unit can transmit the report signal at an arbitrary time to be chosen by himself or he can transmit the report signal only after being paged, when a received identification code is identical to an identification code assigned to his paging unit. In both cases the user must then depress a switch on the actuating means. The permitted transmission time for the report signal can be fixed, for example 30 seconds, or unlimited, the systems being referred to as locked and non-locked systems respectively.

A drawback of the known personal paging system is that a user has to speak information about himself into the paging unit for identification when transmitting a report signal. This is, on the one hand, not always possible in emergency situations and constitutes, on the other hand, a restriction on the available transmission time for the report signal in a locked paging system. Moreover, with this method the central receiving means have no certainty with regard to the identity of a user of a portable paging unit who has transmitted a report signal.

The aim of the invention is to eliminate the drawbacks of the known personal paging system.

This objective is achieved according to the invention for the personal paging system of the type specified in the preamble, in that the transmitting means of a paging unit comprise control means, connected to the comparison means, for prefixing the speech signal section by a section of the modulation signal corresponding to the assigned identification code, the central receiving means being suitable for separating the assigned identification code from the report signal. By this means, when a report signal is received, the central receiving means always know the correct identity of the portable paging unit which has transmitted the report signal and thus, with a relatively high degree of certainty, the identity of the user of the paging unit to whom the paging unit has been assigned. Because the transmission time required for the section of the report signal corresponding to the identification code can be the same for all identification codes of different paging units and this section is always transmitted at the start of the report signal, the central receiving means can separate this identification code simply from the report signal. Because a digital identification code can be transmitted by means of the report signal within a shorter time than a corresponding identification message spoken by a user, there is also a significant gain in time benefiting the useful period of the speech signal, which is an advantage especially in a locked paging system.

Preferably, the personal paging system according to the invention comprises a number of localization transmitters installed at predetermined sites, each of which is suitable for transmitting a localization signal comprising a localization code assigned to the localization transmitter, and a paging unit comprises second receiving means for receiving a localization signal and for separating the localization code therefrom, and storage means for storing the separated localization code, the control means being connected to the storage means and being suitable for prefixing the speech signal section by a section of the modulation signal corresponding to the localization code, and the central receiving means being suitable for separating the localization code from the report signal. This is advantageous when it is also desired to obtain the position of a portable paging unit which transmits a report signal, in addition to the identity of the paging unit, while, for example, the user is at a location which he does not know sufficiently well or when the user is in an emergency situation and not able to speak a clearly understandable message into his paging unit within the permitted transmission time.

The invention is explained with reference to the drawings. In the drawings:

Fig. 1 shows a block diagram of a first embodiment of a personal paging system according to the invention; and

Fig. 2 shows a second embodiment of a personal paging system according to the invention.

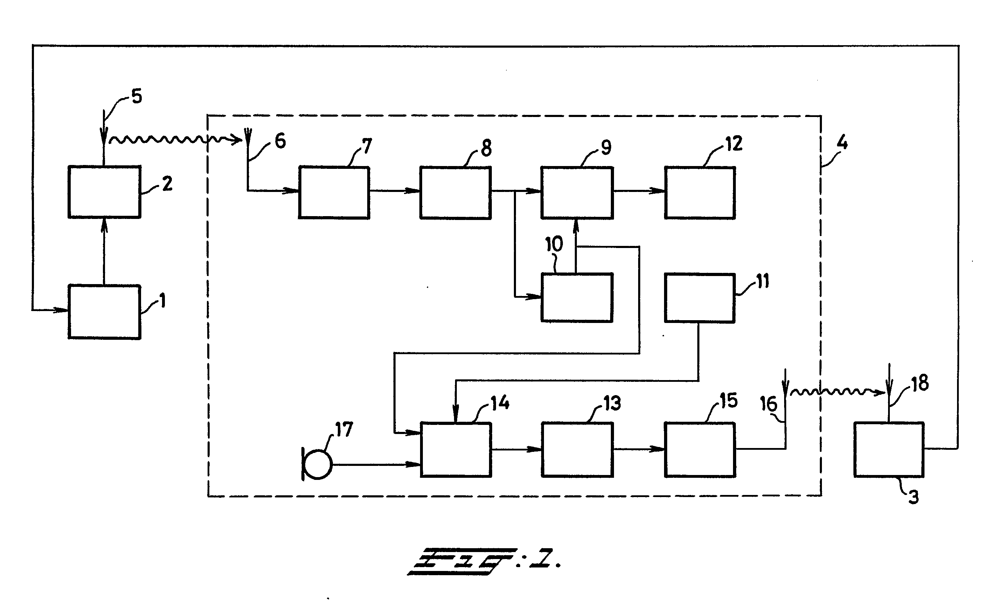

The personal paging system according to the invention shown in Fig. 1 comprises a central processing unit 1, to which a paging transmitter 2 and a report signal receiver 3 are connected, and a number of portable paging units 4.

The processing unit 1 is suitable for use for the selection of an identification code from a number of identification codes assigned to the portable units 4 individually or per group and for controlling the paging transmitter 2 in such a way that the paging transmitter 2 modulates, in particular frequency-modulates, a first carrier wave with a first frequency, for example 40 MHz, with the identification code received from the processing unit 1 for transmitting a corresponding paging signal via an aerial 5 of the paging transmitter 2.

The portable unit 4 comprises an aerial 6, a radio receiver with a demodulator 7 and a decoder 8, which are suitable for receiving the paging signal and for separating the identification code, transmitted by means of the paging signal, from the paging signal received. The identification code received is compared in a comparator 9 with each of a number of identification codes which are stored in a register 10 and which are assigned to the portable paging unit 4. If the received and assigned identification codes are identical, a signalling element 12 is then actuated. The portable unit 4 can comprise a number of different signalling elements 12 which can be suitable for giving an optical, acoustic or mechanically detectable signal to the user of the portable unit 4.

The portable paging unit 4 also comprises a modulator 13 which receives a modulation signal from a control circuit 14 for modulation, in particular frequency modulation, of a second carrier wave for generating herewith a report signal which is transmitted via a transmitter 15 to an aerial 16.

On the input side, the modulator 13 has a low-band-pass filter with, for example, a 3 dB frequency of 3 kHz, and a level-adjustment circuit for the modulation signal.

The control circuit 14 receives control signals from actuating means 11, an identification code, assigned to the portable paging unit 4, from the register 10 and a speech signal from a microphone 17. By suitable operation of the actuating means 11, the user can put into operation the transmission section 13-17 of the portable unit 4, the control circuit 14 supplying a modulation signal to the modulator 13 such that a section thereof which corresponds to the assigned identification code prefixes a section of the modulation signal corresponding to the speech signal.

The central receiver 3 with an aerial 18 is suitable for receiving the report signal transmitted by a portable unit 4 and for separating therefrom the assigned identification code of the portable unit 4 which is transmitted therewith. The identification code received by the central receiver 3 is supplied to the processing unit 1 for further processing. A number of central receivers 3 can be installed distributed over the region within which the portable units 4 are located. By this means the transmitting power of the transmitter 15 can be restricted and even report signals transmitted at the same time by different portable paging units 4 within the ranges of different central receivers 3 can be received and processed by these receivers 3, so that the chance of collision of different report signals is reduced.

In a particular embodiment, the transmitter 2 and the receiving section of a portable unit 4 can be suitable for transmitting and, respectively, receiving a speech signal, by which means speech communication in two directions is possible.

The central processing unit 1 can be connected to a telephone exchange.

A portable paging unit 4 can be suitable for programming therein identification codes assigned to the unit 4 from outside the paging unit 4, which identification codes are then stored in the register or the memory 10, as disclosed in Netherlands Patent Application 80.00578, which corresponds to American Patent 4,422,071.

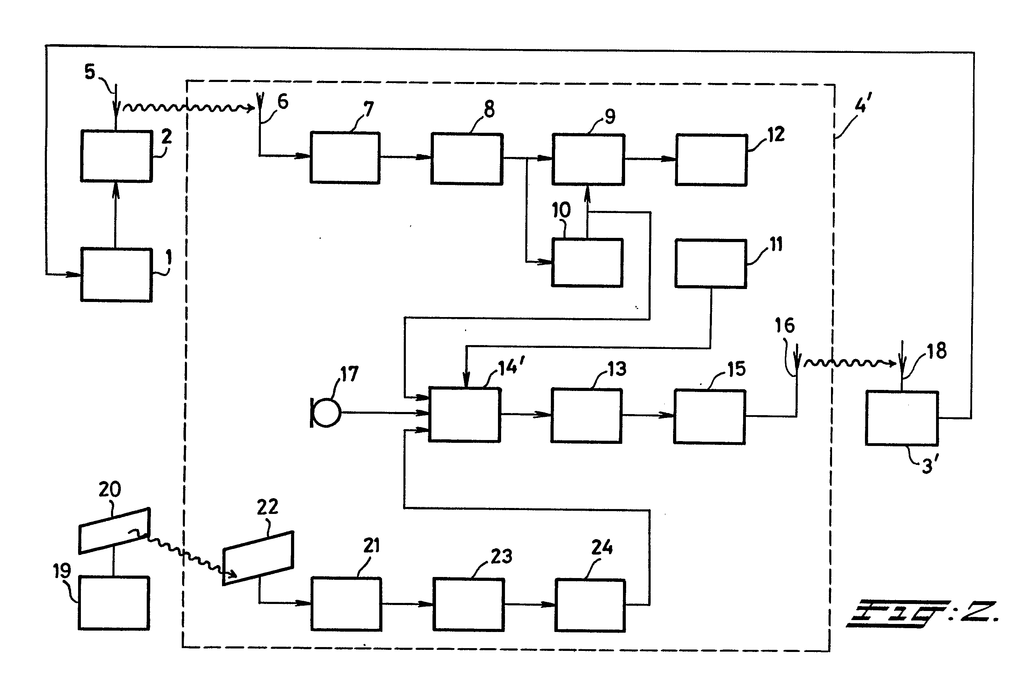

The second embodiment of the personal paging system according to the invention which is shown in Fig. 2 comprises a section that, with the exception of the central receiver 3', in place of 3, and the control circuit 14', in place of 14, is identical to the first embodiment shown in Figure 1. Components having the same functions therefore have the same reference numerals and will not be explained again below. A portable paging unit of the system shown in Fig. 2 has the reference numeral 4'.

The personal paging system shown in Fig. 2 comprises, in addition to the paging system shown in Fig. 1, a number of localization transmitters 19, with an aerial 20, which can be a loop aerial, which are fitted locally, for example adjacent to doors, for transmitting a localization signal which comprises a localization code individually assigned to the localization transmitter. The portable paging unit 4' comprises a radio-receiver 21, which is connected to an aerial 22, which can be a frame aerial, and a decoder 23, which are suitable for receiving the localization signal and for separating the localization code therefrom. The received localization code is stored in a register 24.

The control means 14' are suitable for forming a modulation signal which is intended for the modulator 13 and consists of a section which corresponds to the speech signal received by the microphone 17 and is prefixed by an identification code, from the register 10, assigned to the portable unit 4′ and the localization code stored in the register 24. The central receiver 3′ is suitable for separating the identification code, the localization code and the speech signal from a received report signal.

## Claims

1. Personal paging system comprising a paging transmitter for transmitting a paging signal obtained by modulation of a first carrier wave with a first frequency by a selectable identification code and a number of portable paging units each with first receiving means for receiving the paging signal and for separating the transmitted identification code therefrom, comparison means for comparing the transmitted identification code with an identification code assigned to the paging unit, signalling means for giving a signal depending on the result of the comparison, transmitting means for transmitting a report signal obtained by modulation of a second carrier wave with a second frequency by a modulation signal, the modulation signal comprising a section corresponding to a speech signal, and actuating means for releasing the transmitting means, and central receiving means which are suitable for receiving the report signal and for separating the speech signal therefrom, characterized in that the transmitting signal of a paging unit comprise control means, connected to the comparison means, for prefixing the speech signal section by a section of the modulation signal corresponding to the assigned identification code, the central receiving means being suitable for separating the assigned identification code from the report signal.

2. Personal paging system according to claim 1, characterized by a number of localization transmitters installed at predetermined sites, each of which is suitable for transmitting a localization signal comprising a localization code assigned to the localization transmitter and in that a paging unit comprises second receiving means for receiving a localization signal and for separating the localization code therefrom, and storage means for storing the separated localization code, the control means are connected to the storage means and are suitable for prefixing the speech signal section by a section of the modulation signal corresponding to the localization code, and the central receiving means are suitable for separating the localization code from the report signal.

Fig. 1.

EP 0 372 633 A1

FIG.2.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 984 807 (HAEMMING) <br> * Column 1, line 40 - column 2, line 47; column 4, line 8 - column 5, line 30; figure 3 * <br> --- | 1-2 | G 08 B 3/10 |
| X | US-A-4 009 375 (WHITE) <br> * Column 3, line 20 - column 5, line 45; figures 1-4 * <br> --- | 1-2 | |
| A | US-A-3 739 329 (LESTER) <br> * Column 2, line 50 - column 5, line 13; figures 1,3 * <br> ----- | 1-2 | |

TECHNICAL FIELDS SEARCHED (Int. Cl.5)

G 09 B
H 04 B
G 08 G

The present search report has been drawn up for all claims

| Place of search | Date of completion of the search | Examiner |
|---|---|---|
| THE HAGUE | 12-03-1990 | SGURA S. |